# EUROPÄISCHE PATENTSCHRIFT

(11) **EP 0 814 989 B1**
(45) Veröffentlichungstag und Bekanntmachung des Hinweises auf die Patenterteilung: **28.06.2000**
(21) Anmeldenummer: 96905793.4
(22) Anmeldetag: 24.02.1996
(51) Int. Cl.: B60T 13/72, B60T 7/04

(54) **BREMSKRAFTVERSTÄRKER**
BRAKING FORCE AMPLIFIER
SERVOFREIN

(30) Priorität: 14.03.1995 DE 19509065
(43) Veröffentlichungstag der Anmeldung: 07.01.1998
(73) Patentinhaber: Continental Teves AG & Co. oHG, 60488 Frankfurt (DE)
(72) Erfinder: DRUMM, Stefan, D-55291 Saulheim (DE); BERTHOLD, Thomas, D-64289 Darmstadt (DE); ECKERT, Alfred, D-55294 Bodenheim (DE)
(86) Internationale Anmeldenummer: EP9600770
(87) Internationale Veröffentlichungsnummer: WO9628329

(56) Entgegenhaltungen:
- EP-A- 0 379 329
- EP-A- 0 616 932
- DE-A- 3 627 279
- DE-A- 4 400 688
- US-A- 4 395 883
- PATENT ABSTRACTS OF JAPAN vol. 8, no. 253 (M-339), 20.November 1984 & JP,A,59 128038 (SUMITOMO), 24.Juli 1984,
- PATENT ABSTRACTS OF JAPAN vol. 9, no. 46 (M-360), 27.Februar 1985 & JP,A,59 186755 (MAZDA), 23.Oktober 1984,

## Beschreibung

Die Erfindung betrifft einen Bremskraftverstärker mit einer mit einem Betätigungspedal in kraftübertragender Verbindung stehenden, aus zwei teleskopartig ineinander geführten Teilen bestehenden zweiteiligen Betätigungsstange, sowie einer zwischen den beiden Teilen angeordneten Einrichtung zur Ermittlung einer auf das Betätigungspedal einwirkenden Eingangskraft, wobei der erste Teil bzw. Schaft mit dem Betätigungspedal verbunden ist und eine Bohrung aufweist.

Ein aus der US-A-4,395,883 bekannter Bremskraftverstärker ist mit einer Einrichtung zur Ermittlung der am Bremspedal eingeleiteten Betätigungskraft ausgestattet. Diese Einrichtung besteht aus einem kraftsensierenden Element, beispielsweise einem piezoelektrischen Kristall, der zwischen den beiden Teilen der mit dem Bremspedal in kraftübertragender Verbindung stehenden Betätigunsstange angeordnet ist. Weniger vorteilhaft ist bei dem vorbekannten Bremskraftverstärker anzusehen, daß das kraftsensierende Element durch hohe Betätigungskräfte beschädigt werden kann.

Es ist daher Aufgabe der vorliegenden Erfindung, Maßnahmen vorzuschlagen, die es ermöglichen, am Betätigungspedal eingeleitete hohe Eingangskräfte ohne Gefahr einer Beschädigung des kraftsensierenden Elementes zu ermitteln. Die Sensierung soll dabei kosten- und bauraumsparend erfolgen.

Die Lösung der gestellten Aufgabe besteht darin, daß die Einrichtung zur Ermittlung der Eingangskraft durch einen Druckgeber gebildet ist, der mit einem mit einer elastischen Masse gefüllten Druckraum zusammenwirkt, der durch die Bohrung radial begrenzt ist, und daß der zweite Teil durch eine einen Ventilkolben eines Steuerventils des Bremskraft-verstärkers betätigenden Spitze besteht, die den Druckraum axial begrenzt und mittels der elastischen Masse mit dem Schaft verklebt ist.

Vorteilhafte Weiterbildungen des Erfindungsgegenstandes sind in den Unteransprüchen 2 bis 5 aufgeführt.

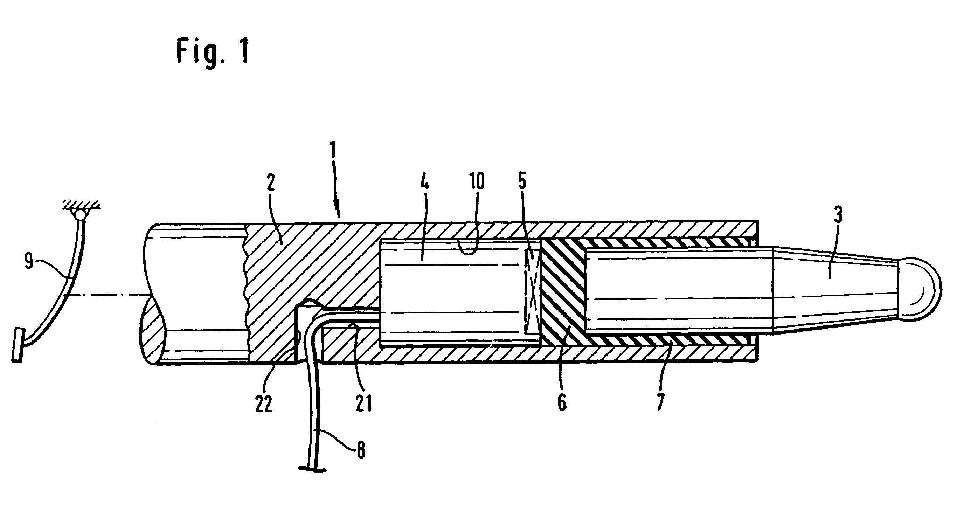

Die Erfindung wird in der nachfolgenden Beschreibung eines Ausführungsbeispiels unter Bezugnahme auf die beiliegende Zeichnung näher erläutert. In der Zeichnung zeigen die Figuren 1,2 und 3 eine erste, eine zweite sowie eine dritte Ausführung des Erfindungsgegenstandes.

In Fig. 1 ist eine Betätigungsstange 1 eines nicht gezeigten pneumatischen Bremskraftverstärkers dargestellt, die mit einem lediglich schematisch angedeuteten Betätigungspedal, vorzugsweise einem Bremspedal 9, in Verbindung steht. Die Betätigungsstange 1 ist dabei zweiteilig ausgeführt und besteht aus einem am Bremspedal angekoppelten ersten Teil bzw. Schaft 2, sowie einem zweiten Teil bzw. einer Spitze 3, die von einer an dem dem Bremspedal abgewandten Ende des Schafts 2 ausgebildeten zylindrischen Bohrung 10 teilweise teleskopartig aufgenommen wird. Die Spitze 3 kann beispielsweise mit einem nicht gezeigten Ventilkolben eines pneumatischen Steuerventils des Bremskraftverstärkers in kraftübertragender Verbindung stehen. Außerdem nimmt die Bohrung 10 einen Druckgeber 4 auf, der darin zusammen mit seinem Sensorelement 5 und dem Ende der Spitze 3 einen Druckraum 6 begrenzt, der mit einem Druckmittel, beispielsweise einer elastischen, aber fast inkompressiblen Masse 7 (z.B. Silikon) gefüllt ist. Das Sensorelement 5 ist der Wirkung des im Druckraum 6 bei einer Betätigung entstehenden Druckes ausgesetzt, der der zu messenden Betätigungskraft proportional ist. Dabei ist es sinnvoll, wenn die Spitze 3 mit Hilfe der elastische Masse 7 mit dem Schaft 2 verklebt ist. Um dem Druckgeber 4 zugeordnete elektrische Leitungen 8 nach außen herausführen zu können, sind im Schaft 2 Durchgänge 21,22 ausgebildet, die beispielsweise durch zwei senkrecht zueinander verlaufende Bohrungen gebildet sein können.

Voraussetzung für das beschriebene Meßprinzip ist der Aufbau eines isotropen Druckes im Druckraum 6. Aus diesem Grund darf das Verhältnis der Länge des zylindrischen Druckraums 6 zu seinem Durchmesser nicht allzu klein werden, wobei Risse und Gasblasen im Druckraum 6 unerwünscht sind.

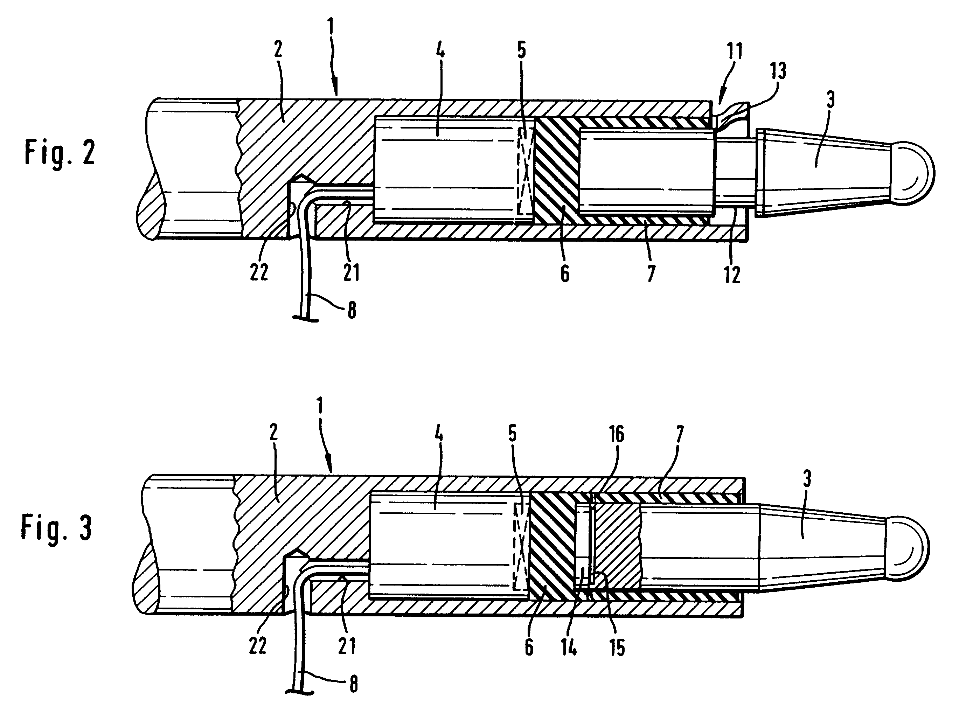

Um sich negativ auswirkende Zugbelastungen im Druckraum 6 zu verhindern, ist bei der in Fig. 2 gezeigten Ausführung ein die Relativbewegung zwischen Schaft 2 und Spitze 3 begrenzender Anschlag 11 vorgesehen. Der Anschlag 11 besteht dabei vorzugsweise aus einer oder mehreren radialen Eindrückungen 13, die am Ende des Schaftes 2 ausgeführt sind, und die mit in der Zeichnung links gezeigten Flanke einer in der Spitze 3 ausgebildeten Umfangsnut 12 zusammenwirken.

Bei der in Fig. 3 dargestellten dritten Ausführungsvariante des Erfindungsgegenstandes wird der Druckraum 6 durch eine am Ende der Spitze 3 axial anliegende runde Druckplatte 14 begrenzt. Das Ende der Spitze 3 ist dabei vorzugsweise hohl ausgebildet, so daß zwischen ihm und der Druckplatte 14 ein Hohlraum 15 entsteht, der bei einer Zugbelastung der Betätigungsstange 1 eine Übertragung der Zugkraft auf die elastische Masse 7 im Druckraum 6 verhindert, so daß im Druckraum 6 keine Rißbildung stattfindet. Durch eine axiale Verlängerung des Hohlraums 15 bilden sich vielmehr radial vom Hohlraum 15 ausgehende, bis zur Wand der Bohrung 10 reichende Risse, die das Meßprinzip nicht stören.

### Bezugszeichenliste

- 1: Betätigungsstange
- 2: Schaft
- 3: Spitze
- 4: Druckgeber
- 5: Sensorelement
- 6: Druckraum
- 7: Masse
- 8: Leitung
- 9: Bremspedal
- 10: Bohrung
- 11: Anschlag
- 12: Umfangsnut
- 13: Eindrückung
- 14: Druckplatte
- 15: Hohlraum
- 16: Riß

## Patentansprüche

1. Bremskraftverstärker mit einer mit einem Betätigungspedal (9) in kraftübertragender Verbindung stehenden, aus zwei teleskopartig ineinander geführten Teilen (2,3) bestehenden zweiteiligen Betätigungsstange (1), sowie einer zwischen den beiden Teilen (2,3) angeordneten Einrichtung (4,5) zur Ermittlung einer auf das Betätigungspedal (9) einwirkenden Eingangskraft, wobei der erste Teil bzw. Schaft (2) mit dem Betätigungspedal (9) verbunden ist und eine Bohrung (10) aufweist, dadurch **gekennzeichnet**, daß die Einrichtung zur Ermittlung der Eingangskraft durch einen Druckgeber (4,5) gebildet ist, der mit einem mit einer elastischen Masse (7) gefüllten Druckraum (6) zusammenwirkt, der durch die Bohrung (10) radial begrenzt ist, und daß der zweite Teil (3) durch eine einen Ventilkolben eines Steuerventils des Bremskraftverstärkers betätigenden Spitze (3) besteht, die den Druckraum (6) axial begrenzt und mittels der elastischen Masse (7) mit dem Schaft (2) verklebt ist.

2. Bremskraftverstärker nach Anspruch 1, dadurch **gekennzeichnet**, daß der Schaft (2) einen Anschlag (11) aufweist, der ein Mitnehmen der Spitze (3) bei einer Zugbelastung der Betätigungsstange (1) ermöglicht.

3. Bremskraftverstärker nach Anspruch 2, dadurch **gekennzeichnet**, daß der Anschlag (11) durch eine an dem Betätigungspedal abgewandten Ende des Schaftes (2) ausgebildete Einscherung bzw. Eindrückung (13) gebildet ist, die in eine Umfangsnut (12) der Spitze (3) eingreift.

4. Bremskraftverstärker nach Anspruch 1, dadurch **gekennzeichnet**, daß die Kraftübertagung von der Spitze (3) auf die elastische Masse (7) mittels einer an der Spitze (3) axial anliegenden Druckplatte (14) erfolgt, die mit dem hohl ausgebildeten Ende der Spitze (3) einen Hohlraum (15) begrenzt.

5. Bremskraftverstärker nach einem der vorhergehenden Ansprüche, dadurch **gekennzeichnet**, daß im Schaft (2) Durchgänge (21,22) vorgesehen sind, die zum Druckgeber (4,5) führende elektrische Leitungen (8) aufnehmen.

## Claims

1. Brake power booster including a bipartite actuating rod (1) which is in a force-transmitting connection with an actuating pedal (9) and includes two parts (2, 3) that are telescopically slidable in each other, and a device (4, 5) which is interposed between the two parts (2, 3) for determining an input force that is applied to the actuating pedal (9), wherein the first part or stem (2) is connected to the actuating pedal (9) and includes a bore (10),
**characterized** in that the device for determining the input force is provided by a pressure generator (4, 5) which cooperates with a pressure chamber (6) that is filled with an elastic substance (7) and is defined radially by the bore (10), and in that the second part is a tip (3) actuating a valve piston of a control valve of the brake power booster, the tip limiting the pressure chamber (6) axially and being cemented to the stem (2) by means of the elastic substance (7).

2. Brake power booster as claimed in claim 1,
**characterized** in that the stem (2) has a stop (11) which permits entrainment of the tip (3) when the actuating rod (1) is subjected to tensile load.

3. Brake power booster as claimed in claim 2,
**characterized** in that the stop (11) is provided by a sheared-in groove or indentation (13) on the end of the stem (2) remote from the actuating pedal and is engaged in a circumferential groove (12) of the tip (3).

4. Brake power booster as claimed in claim 1,
**characterized** in that forces are transmitted from the tip (3) to the elastic substance (7) by way of a pressure plate (14) which abuts the tip (3) axially, the pressure plate along with the hollow end of the tip (3) defining a hollow chamber (15).

5. Brake power booster as claimed in any one of the preceding claims,
**characterized** in that the stem (2) contains passages (21, 22) which accommodate electric lines (8) leading to the pressure generator (4, 5).

## Revendications

1. Amplificateur de frein, comprenant une tringle d'actionnement (1) en deux parties, reliée en transmission de force à une pédale d'actionnement (9) et constituée de deux parties (2, 3) guidées télescopiquement l'une dans l'autre, et comprenant un dispositif (4, 5) disposé entre les deux parties (2, 3) pour déterminer une force d'entrée agissant sur la pédale d'actionnement (9), la première partie ou corps (2) étant reliée à la pédale d'actionnement (9) et présentant un perçage (10), **caractérisé** en ce que le dispositif pour déterminer la force d'entrée est formé par un capteur de pression (4, 5) qui coopère avec une chambre de pression (6), remplie d'une masse élastique (7) et délimitée radialement par le perçage (10), et en ce que la deuxième partie (3) est constituée par une pointe (3) actionnant un piston de soupape d'une soupape de commande de l'amplificateur de frein, pointe qui délimite axialement la chambre de pression (6) et est assemblée par collage au corps (2) par l'intermédiaire de la masse élastique (7).

2. Amplificateur de frein selon la revendication 1, **caractérisé** en ce que le corps (2) présente une butée (11) qui permet d'entraîner la pointe (3) lorsque la tringle d'actionnement (1) est sollicitée en traction.

3. Amplificateur de frein selon la revendication 2, **caractérisé** en ce que la butée (11) est formée par une entaille ou empreinte (13), qui est ménagée à l'extrémité du corps (2) qui est opposée à la pédale d'actionnement et qui s'engage dans une rainure périphérique (12) de la pointe (3).

4. Amplificateur de frein selon la revendication 1, **caractérisé** en ce que la transmission de force de la pointe (3) sur la masse élastique (7) s'effectue au moyen d'une plaque de pression (14), qui s'applique axialement contre la pointe (3) et qui délimite une cavité (15) avec l'extrémité, réalisée creuse, de la pointe (3).

5. Amplificateur de frein selon l'une quelconque des revendications précédentes, **caractérisé** en ce que des passages (21, 22) sont prévus dans le corps (2), qui reçoivent des lignes électriques (8) menant au capteur de pression (4, 5).
